# EUROPÄISCHE PATENTSCHRIFT

(11) **EP 3 699 638 B1**
(45) Veröffentlichungstag und Bekanntmachung des Hinweises auf die Patenterteilung: **27.01.2021**
(21) Anmeldenummer: 19158889.6
(22) Anmeldetag: 22.02.2019
(51) Int. Cl.: G01S 17/42, G01S 7/481

(54) **OPTOELEKTRONISCHER SENSOR UND VERFAHREN ZUR ERFASSUNG EINES OBJEKTS**
OPTOELECTRONIC SENSOR AND METHOD FOR DETECTING AN OBJECT
CAPTEUR OPTOÉLECTRONIQUE ET PROCÉDÉ DE DÉTECTION D'UN OBJET

(43) Veröffentlichungstag der Anmeldung: 26.08.2020
(73) Patentinhaber: SICK AG, 79183 Waldkirch (DE)
(72) Erfinder: Buser, Roger, 79106 Freiburg (DE)

(56) Entgegenhaltungen:
- EP-A1- 3 165 958
- WO-A1-2019/020532
- DE-A1-102005 043 931

## Beschreibung

Die Erfindung betrifft einen optoelektronischen Sensor, insbesondere einen Laserscanner, und ein Verfahren zur Erfassung eines Objekts in einem Überwachungsbereich nach dem Oberbegriff von Anspruch 1 beziehungsweise 15.

Für Abstandsmessungen, die einen großen horizontalen Winkelbereich des Messsystems erforderlich machen, eignen sich optoelektronische Systeme und besonders Laserscanner. In einem Laserscanner überstreicht ein von einem Laser erzeugter Lichtstrahl mit Hilfe einer Ablenkeinheit, meist eines Drehspiegels, periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit in einem Phasen- oder Pulsverfahren zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Es ist bekannt, das Sendelicht mit einem Sendetubus abzuschirmen, um zu verhindern, dass Sendelicht auf den Empfangspfad überspricht. Besonders bei nahen Zielen wird sonst unter Umständen der Signalanteil sogar dominant, der an dem Drehspiegel oder an einer Frontscheibe in den Empfangspfad gelangt, und das verzerrt oder verhindert eine Objekterfassung. Der Sendetubus wird am Drehspiegel befestigt und verschattet unweigerlich einen Teil des Drehspiegels. Die entsprechenden Teile des Drehspiegels und der Empfangsoptik bleiben damit ungenutzt. Ein Teil des Empfangslichts geht deswegen verloren.

Ein solcher Sendetubus wird beispielsweise in der DE 44 12 044 A1 offenbart. Die EP 3 165 958 A1 beschreibt eine entsprechende Abschirmung für einen 3D-Scanner, dessen Scanbewegung über zwei Rotationsachsen erfolgt.

In der DE 10 2005 043 931 A1 wird ein Laserscanner vorgestellt, dessen Sendeoptik einen zum Umlenkspiegel hin offenen Abschattungszylinder aufweist. Die Abschirmung ist unvollständig, um Aperturverluste für das Empfangsstrahlenbündel möglichst klein zu halten. Auf dem Drehspiegel ist ein Absorptionsstreifen als Streulichtfalle für das vom Fenster gestreute Licht vorgesehen.

Die WO 2019/020532 A1 offenbart eine Lidar-Vorrichtung, die einen L-fömigen Lichtleiter als sendeseitige Ablenkung verwendet. Empfangsseitig wird das Licht über einen Spiegel auf den Detektor umgelenkt, wobei die sende- und empfangsseitigen Strahlengänge in verschiedenen geometrischen Anordnungen entkoppelt sind.

Somit bleibt bisher entweder die Schirmwirkung und damit Unterdrückung von optischem Übersprechen unvollständig, oder es geht ein Teil des Nutzsignals durch Abschattungseffekte verloren.

Es ist weiterhin bekannt, Laserscanner mit Mehrzonenlinsen auszustatten, um die Erfassung im Nahbereich zu verbessern. Zum einen geht eine Nahzone auf Kosten der Erfassung im Fernfeld und reduziert dadurch die maximale Reichweite. Außerdem löst das nicht das Problem der Abschattung durch einen Sendetubus. Eine entsprechende Mehrzonenlinse ist beispielsweise in EP 0 897 120 A2 beschrieben.

Es ist daher Aufgabe der Erfindung, die Erfassung mit einem gattungsgemäßen Sensor zu verbessern.

Diese Aufgabe wird durch einen optoelektronischen Sensor, insbesondere einen Laserscanner, und ein Verfahren zur Erfassung eines Objekts in einem Überwachungsbereich nach Anspruch 1 beziehungsweise 15 gelöst. Ein Lichtsender erzeugt Sendelicht und sendet es in den Überwachungsbereich aus. Mit Hilfe einer beweglichen Ablenkeinheit wird eine periodische Scanbewegung des Sendelichts erzeugt. Das Sendelicht wird als remittiertes Sendelicht wieder empfangen, nachdem es zumindest teilweise im Überwachungsbereich von einem Objekt zurückgeworfen wurde. Das entsprechende Empfangssignal eines Lichtempfängers wird ausgewertet, um eine optisch erfassbare Information über das Objekt zu gewinnen, wie eine binäre Anwesenheitsinformation, einen Abstand, eine Position oder auch eine Farbe. Eine Abschirmeinrichtung verhindert, dass Sendelicht auf den Lichtempfänger überspricht, also beispielsweise an der Ablenkeinheit oder einer Frontscheibe in den Lichtempfänger reflektiert wird, ohne den Laserscanner verlassen zu haben und dort im Überwachungsbereich auf ein Objekt zu treffen. Die Abschirmeinrichtung ist um den Strahlengang des Sendelichts angeordnet, was aber nur vorzugsweise heißt, dass das Sendelicht in allen und nicht nur einigen Richtungen umgeben ist.

Die Erfindung geht von dem Grundgedanken aus, den Anteil des remittierten Sendelichts, der herkömmlich an der Abschirmeinrichtung verlorengeht, zumindest teilweise doch auszunutzen. Ausgangspunkt ist dabei die Erkenntnis, dass ohne Gegenmaßnahme die Abschirmeinrichtung einen Teil des Strahlquerschnitts des remittierten Sendelichts abschattet. Deshalb wird in dem Bereich des Strahlquerschnitts, der diesen Schatten wirft, ein Umlenkelement angeordnet. Damit wird remittiertes Sendelicht, das sonst die Abschirmeinrichtung treffen würde, zumindest teilweise zum Lichtempfänger beziehungsweise zunächst zu einer Empfangsoptik gelenkt. Anzumerken ist, dass es zwei Formen der Abschattung gibt. Einmal fällt ein Teil des remittierten Sendelichts direkt auf die Abschirmeinrichtung und erreicht die Ablenkeinheit gar nicht mehr. Zum zweiten wird aber auch ein Teil des remittierten Sendelichts noch abgelenkt, fällt aber dann auf die Abschirmeinrichtung. Die Umlenkung betrifft vorzugsweise einen möglichst großen Anteil des sonst an der Abschirmeinrichtung verlorenen Lichts.

Die Erfindung hat den Vorteil, dass der Signalpegel des Sensors erhöht wird. Dies wiederum lässt sich für eine Reichweitenerhöhung oder eine genauere Erfassung nutzen.

Das Umlenkelement macht einen bisher ungenutzten Abschattungsbereich oder eine Totzone der Abschirmeinrichtung zugänglich. Die sonstige Funktion des Sensors wird dabei in keiner Weise beeinträchtigt, insbesondere die volle Abschirmwirkung gegen Übersprechen von Sendelicht erhalten. Es ist keine Veränderung der Baugröße erforderlich. Das Umlenkelement selbst kann sehr kostengünstig durch ein Spritzgussverfahren hergestellt werden, alternativ aber auch aus Glas.

Das Umlenkelement ist bevorzugt derart angeordnet und ausgebildet, dass der umgelenkte Anteil des remittierten Sendelichts die Ablenkeinheit nicht mehr trifft. Die Umlenkung führt also den umgelenkten Anteil des remittierten Sendelichts an der Ablenkeinheit vorbei. Dafür gibt es die beiden schon erwähnten Möglichkeiten: Das remittierte Sendelicht wird schon vor der Ablenkeinheit umgelenkt und/oder die Ablenkeinheit lässt das remittierte Sendelicht zu dem Umlenkelement beziehungsweise von dem Umlenkelement durch.

Die Abschirmeinrichtung ist bevorzugt als ein das Sendelicht umgebender Sendetubus ausgebildet. Der Sendetubus ähnelt einem verkürzten Periskop, das aber nur sendeseitig genutzt wird. In einer L-förmigen Ausführungsform führt der erste Arm vom Lichtsender zu der Ablenkeinheit und der zweite Arm rechtwinklig dazu von der Ablenkeinheit zur Frontscheibe. Die Abschirmeinrichtung umgibt vorteilhafterweise den gesamten internen Pfad des Sendelichts. Unabhängig von der Ausgestaltung bewegt sich die Abschirmeinrichtung vorzugsweise mit der Ablenkeinheit mit, ist beispielsweise an deren Spiegelfläche befestigt.

Das Umlenkelement weist bevorzugt eine Spiegelfläche oder ein Prisma auf. Damit ist eine Umlenkung um einen gewünschten Winkel besonders einfach möglich. Alternativ kann jedes andere optische Umlenkprinz einschließlich Refraktion, Reflexion und Diffraktion verwirklicht sein, und zu der Strahlumlenkung ist auch eine Strahlformung denkbar. Einige Beispiele sind Lichtleiter, ein Gitter oder ein diffraktives optisches Element, eine gekippte Linse oder ein Prisma mit gekrümmter Eintrittsfläche oder Austrittsfläche.

Das Umlenkelement ist bevorzugt mit der Ablenkeinheit mitbewegt angeordnet. Dazu wird es nochmals bevorzugt mit der Ablenkeinheit verbunden. Ein ruhendes Umlenkelement ist wegen der sich im Verlauf der Bewegung der Ablenkeinheit ändernden Strahlverläufe und Orientierungen nicht ohne weiteres möglich. Denkbar wäre noch ein umlaufender, die Ablenkeinheit umgebender Spiegel oder dergleichen, was aber aus konstruktiven Gründen weniger vorteilhaft ist.

Bevorzugt ist ein erstes Umlenkelement im Strahlengang des remittierten Sendelichts vor der Ablenkeinheit angeordnet. Das erste Umlenkelement ist für den abgeschatteten Anteil des remittierten Sendelichts zuständig, der sonst direkt auf die Abschirmeinrichtung fallen würde. Das erste und je nach Ausführungsform möglicherweise einzige Umlenkelement lenkt dabei die Lichtstrahlen des remittierten Sendelichts schon um, ehe sie auf die Ablenkeinheit fallen könnten. Ohne das erste Umlenkelement würden diese Lichtstrahlen auf dem dann direkten Ausbreitungsweg die Abschirmeinrichtung treffen, und nochmals in direkter Verlängerung befindet sich die Ablenkeinheit. Der von dem ersten Umlenkelement erzeugte erste Umgehungspfad ist ein kurzer Umgehungspfad auf der Vorderseite der Ablenkeinheit beziehungsweise schon vor der Ablenkeinheit und der Abschirmeinrichtung. Das erste Umlenkelement ist in einer Höhenrichtung entsprechend einer Drehachse der Ablenkeinheit unten, nahe der Empfangsoptik angeordnet. Sonst würde auf die Abschirmeinrichtung umgelenkt oder es müsste eine Mehrfachablenkung zu deren lateraler Umgehung erfolgen. Dabei wird ohne Beschränkung der Allgemeinheit von einer Orientierung ausgegangen, in der sich der Lichtempfänger unten im Gerät befindet.

Die Abschirmeinrichtung ist bevorzugt L-förmig ausgebildet, und das erste Umlenkelement ist zwischen den Armen der L-Form angeordnet. Bei einer bevorzugten Ausführungsform mit einem L-förmigen Sendetubus umschließen die beiden Arme der L-Form einen rechten Winkel, und darin sitzt das erste Umlenkelement. Steht ausnahmsweise die Spiegelfläche der Ablenkeinheit nicht im 45°-Winkel, so ergibt sich eine entsprechend verzerrte L-Form.

Vorzugsweise ist ein zweites Umlenkelement in der Verlängerung des Strahlengangs des remittierten Sendelichts über die Ablenkeinheit hinaus angeordnet. Das zweite Umlenkelement befindet sich demnach aus Sicht des remittierten Sendelichts hinter der Ablenkeinheit. Während das erste Umlenkelement vorzugsweise unterhalb der Abschirmeinrichtung anzuordnen ist, befindet sich das zweite Umlenkelement umgekehrt bevorzugt oberhalb. Es ist zuständig für den abgeschatteten Anteil des remittierten Sendelichts, der noch an der Ablenkeinheit abgelenkt wird, danach aber auf die Abschirmeinrichtung trifft. Die Bezeichnung zweites Umlenkelement ist nur ein Name. Obwohl vorzugsweise das erste und das zweite Umlenkelement vorhanden sind, gibt es auch Ausführungsformen mit jeweils nur dem ersten Umlenkelement oder nur dem zweiten Umlenkelement.

Die Ablenkeinheit weist bevorzugt mindestens einen Bereich auf, der remittiertes Sendelicht zumindest teilweise passieren lässt. Die Ablenkeinheit weist in diesem Bereich eine Öffnung oder ein zumindest teiltransparentes Fenster auf, wo das remittierte Sendelicht nicht gespiegelt und abgelenkt, sondern durchgelassen wird.

Der Bereich ist bevorzugt so angeordnet, dass remittiertes Sendelicht durch die Ablenkeinheit auf das zweite Umlenkelement und von dem zweiten Umlenkelement erneut durch die Ablenkeinheit zu dem Lichtempfänger gelangt. Der für das remittierte Sendelicht durchlässige Bereich der Ablenkeinheit wird dafür genutzt, das zweite Umlenkelement hinter der Ablenkeinheit zu erreichen beziehungsweise anschließend wieder zurück durch die Ablenkeinheit zu kommen. Der von dem zweiten Umlenkelement erzeugte zweite Umgehungspfad ist ein langer Umgehungspfad auf der Rückseite der Ablenkeinheit beziehungsweise hinter der Ablenkeinheit und der Abschirmeinrichtung. Der Bereich ist bevorzugt als zwei Schlitze in der Ablenkeinheit in der Projektion der Abschirmeinrichtung auf die Ablenkeinheit ausgebildet. Die Ablenkeinheit ist folglich dort durchlässig für das remittierte Sendelicht, wo der Schatten der Abschirmeinrichtung liegen würde. Dabei ist das erweiterte Verständnis des Schattens zu beachten, der auch Strahlanteile betrifft, die erst nach der Ablenkung an der Ablenkeinheit die Abschirmeinrichtung treffen. Für das Beispiel eines Drehspiegels als Ablenkeinheit und eine L-förmige Abschirmeinrichtung kann man sich fiktiv senkrecht auf die Spiegelfläche einfallendes paralleles Licht vorstellen, der dann von der Abschirmeinrichtung auf die Spiegelfläche geworfene Schatten wird geschlitzt.

Die bewegliche Ablenkeinheit ist bevorzugt als Drehspiegel mit einer Spiegelfläche ausgebildet. Typischerweise steht der Drehspiegel in einem Winkel von 45°, so dass die Strahlen längs der Drehachse erzeugt beziehungsweise empfangen werden und durch die 90°-Umlenkung mit dem Drehspiegel eine Ebene senkrecht zu der Drehachse abgetastet wird. Die Spiegelfläche ist bevorzugt die einzige Spiegelfläche des Drehspiegels.

Lichtsender und Lichtempfänger sind koaxial angeordnet, insbesondere liegt die Abschirmeinrichtung mittig im Strahlengang des remittierten Sendelichts. Bei koaxialer Anordnung überlappen der Sende- und der Empfangsstrahlengang, und deshalb sind die Abschattungseffekte einer Abschirmeinrichtung für das Sendelicht nicht zu vermeiden. Besonders bevorzugt befindet sich der Sendetubus zentriert im Empfangslichtpfad, um eine symmetrische Anordnung zu erhalten und Übersprechen wirksam zu verhindern.

Die Steuer- und Auswertungseinheit ist bevorzugt dafür ausgebildet, aus einer Lichtlaufzeit zwischen Aussenden des Sendelichts und Empfangen des remittierten Sendelichts einen Abstand des Objekts zu bestimmen. Damit entsteht ein entfernungsmessender Sensor, und es wird als Messinformation über das Objekt dessen Abstand bestimmt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Laserscanners;
- Fig. 2: eine dreidimensionale Darstellung des Strahlengangs zum Umlenken unterhalb einer Abschirmung; und
- Fig. 3: eine dreidimensionale Darstellung ähnlich Figur 2 nun auch mit Umlenkung oberhalb der Abschirmung.

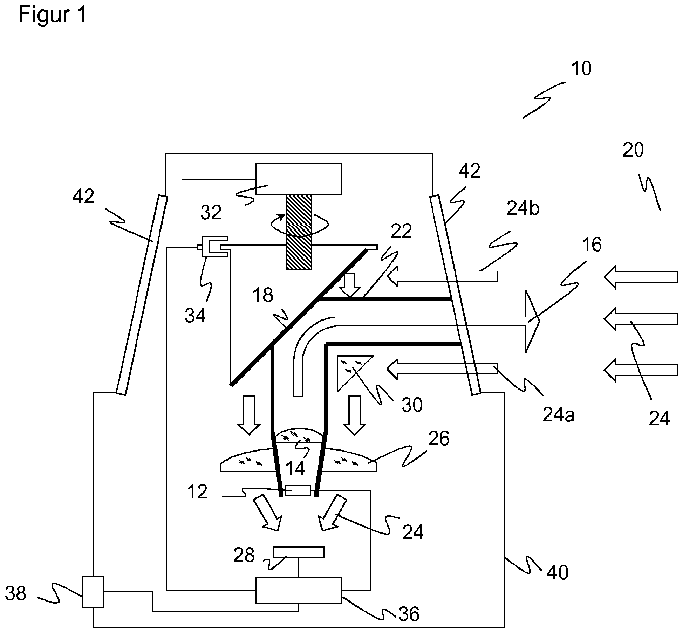

Fig. 1 zeigt eine schematische Schnittdarstellung durch einen erfindungsgemäßen optoelektronischen Sensor in einer Ausführungsform als Laserscanner 10. Ein Lichtsender 12, beispielsweise mit einer Laserlichtquelle, erzeugt mit Hilfe einer Sendeoptik 14 einen Sendelichtstrahl 16. Der Sendelichtstrahl 16 wird mittels einer Ablenkeinheit 18 in einen Überwachungsbereich 20 ausgesandt. Die Ablenkeinheit 18 ist vorzugsweise als Drehspiegel mit einer einzigen, dem Lichtsender 12 zugewandten Spiegelfläche ausgebildet. Der Sendelichtstrahl 16 ist von einer hier als Sendetubus ausgebildeten Abschirmeinrichtung 22 umgeben, die den Sendekanal abschirmt und ein optisches Übersprechen innerhalb des Laserscanners 10 unterdrückt.

Trifft der Sendelichtstrahl 16 in dem Überwachungsbereich 20 auf ein Objekt, so gelangt remittiertes Sendelicht 24 wieder zu dem Laserscanner 10 zurück und wird über die Ablenkeinheit 18 mittels einer Empfangsoptik 26 von einem Lichtempfänger 28 detektiert, beispielsweise einer Photodiode oder für höhere Empfindlichkeit einer Lawinenphotodiode (APD) beziehungsweise einer Anordnung mit mindestens einer Einzelphotonlawinendiode (SPAD).

Ein unterer Teil des remittierten Sendelichts 24a würde wegen Abschattungseffekten der Abschirmeinrichtung 22 den Lichtempfänger 28 nicht erreichen. Für diesen Teil des remittierten Sendelichts 24a liegt die Abschirmeinrichtung 22 als erstes Element nach Eintritt in den Laserscanner 10 in dessen direktem Ausbreitungsweg. Deshalb ist ein erstes Umlenkelement 30 vorgesehen, das einen Umgehungspfad erzeugt, auf dem der untere Teil des remittierten Sendelichts 24a unter Umgehung von Abschirmeinrichtung 22 und Ablenkeinheit 18 zur Empfangsoptik 26 und weiter zu dem Lichtempfänger 28 geleitet wird.

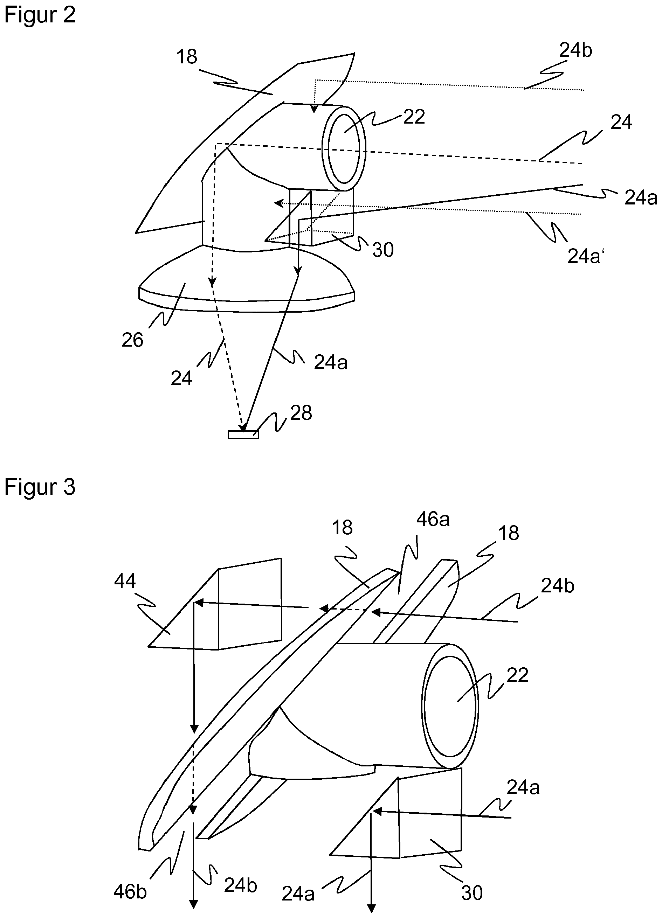

Für einen oberen Teil des remittierten Sendelichts 24b ist in Figur 1 kein solches Umlenkelement vorgesehen. Der obere Teil des remittierten Sendelichts 24b wird zunächst noch an der Ablenkeinheit 18 abgelenkt, fällt aber dann auf die Abschirmeinrichtung 22 und ist deshalb für die Detektion des Lichtempfängers 28 verloren. In einer später anhand der Figur 3 erläuterten weiteren Ausführungsform ist auch für den oberen Teil des remittierten Sendelichts 24b ein Umgehungspfad vorgesehen.

Zu beachten ist, dass in der Schnittansicht der Figur 1 die seitlichen Anteile des remittierten Sendelichts 24 oberhalb und unterhalb der Papierebene nicht zu erkennen sind, deren Ausbreitung die Abschirmeinrichtung 22 nicht stört und die davon ungehindert den Lichtempfänger 28 erreichen. Das ist besser in der später erläuterten dreidimensionalen Ansicht der Figur 2 zu erkennen.

Bei dem dargestellten Laserscanner 10 befindet sich der Lichtsender 12 und dessen Sendeoptik 14 in einer zentralen Öffnung der Empfangsoptik 26. Folglich befindet sich die Abschirmeinrichtung 22 mittig im Strahlengang des remittierten Sendelichts 24. Dies ist nur eine beispielhafte Möglichkeit der Anordnung. Die Erfindung umfasst daneben alternative koaxiale Lösungen, auch solche mit einem eigenen Spiegelbereich für den Sendelichtstrahl 16 oder mit Teilerspiegeln. Auch eine biaxiale Anordnung ist denkbar, wobei dort die Möglichkeit besteht, dass Sende- und Empfangsstrahlengang einander geometrisch ausweichen. Soweit sie das nicht tun, ist eine Umlenkung zur Umgehung der Abschirmeinrichtung auch dort denkbar.

Die Ablenkeinheit 18 wird von einem Motor 32 in eine kontinuierliche Drehbewegung mit einer Scanfrequenz versetzt. Dadurch tastet der Sendelichtstrahl 16 während jeder Scanperiode, also einer vollständigen Umdrehung bei der Scanfrequenz, eine Ebene ab. Am Außenumfang der Ablenkeinheit 18 ist eine Winkelmesseinheit 34 angeordnet, um die jeweilige Winkelstellung der Ablenkeinheit 18 zu erfassen. Die Winkelmesseinheit 34 wird hier beispielhaft von einer Strichscheibe als Winkelmaßverkörperung und einer Gabellichtschranke als Abtastung gebildet.

Eine Steuer- und Auswertungseinheit 36 ist mit dem Lichtsender 12, dem Lichtempfänger 28, dem Motor 32 und der Winkelmesseinheit 34 verbunden. Durch Bestimmen der Lichtlaufzeit zwischen Aussenden des Sendelichtstrahls 16 und Empfang von remittiertem Sendelicht 24 wird unter Verwendung der Lichtgeschwindigkeit auf die Entfernung eines angetasteten Objektes von dem Laserscanner 10 geschlossen. Die jeweilige Winkelstellung, unter welcher dabei der Sendelichtstrahl 16 ausgesandt wurde, ist der Auswertungseinheit von der Winkelmesseinheit 34 bekannt.

Somit stehen nach jeder Scanperiode über den Winkel und die Entfernung zweidimensionale Polarkoordinaten der Objektpunkte in dem Überwachungsbereich 20 zur Verfügung, und entsprechende Messdaten können über eine Schnittstelle 38 übertragen werden. Bei Anwendungen in der Sicherheitstechnik kann die Schnittstelle 38 sicher ausgebildet, insbesondere ein sicherer Ausgang (OSSD, Output Signal Switching Device) für ein sicherheitsgerichtetes Abschaltsignal bei Erkennen einer Schutzfeldverletzung sein.

Der Laserscanner 10 ist von einem Gehäuse 40 umgeben, das im Bereich des Durchtritts von Sendelichtstrahl 16 und remittiertem Sendelicht 24 durch eine Frontscheibe 42 abgeschlossen ist.

Figur 2 zeigt den Strahlengang im Bereich der Ablenkeinheit 18 des Laserscanners 10 in einer vergrößerten dreidimensionalen Ansicht. Damit soll nochmals erläutert werden, wie erfindungsgemäß die Abschattung durch die Abschirmeinrichtung 22 gemildert wird.

Zu beiden Seiten neben der Abschirmeinrichtung 22 auf die Ablenkeinheit 18 auftreffendes remittiertes Sendelicht 24 ist von der Abschattung nicht betroffen und gelangt ungehindert zu der Empfangsoptik 26 und weiter zum Lichtempfänger 28. Ein hypothetischer Lichtstrahl 24a' im unteren Bereich soll den Strahlverlauf ohne die erfindungsgemäße Umlenkung illustrieren. Dieser Lichtstrahl 24a' fiele auf die Abschirmeinrichtung 22 und wäre damit für die Detektion verloren.

Wegen des ersten Umlenkelements 30 wird aber tatsächlich der untere Teil des remittierten Sendelichts 24a auf einen ersten Umgehungspfad geführt, der unter Umgehung von Abschirmeinrichtung 22 und Ablenkeinheit 18 ebenfalls über die Empfangsoptik 26 zu dem Lichtempfänger 28 führt.

Das erste Umlenkelement 30 ist dafür im unteren Teil des Strahlengangs des remittierten Sendelichts 24 vor der Ablenkeinheit 18 und der Abschirmeinrichtung 22 angeordnet. Bei der hier verwendeten L-förmigen Abschirmeinrichtung 22 sitzt also das erste Umlenkelement 30 zwischen den Schenkeln der L-Form. Vorzugsweise sind Ablenkeinheit 18, Abschirmeinrichtung 22 und erstes Umlenkelement 30 miteinander verbunden. Jedenfalls sollte vorzugsweise das erste Umlenkelement 30 und auch die Abschirmeinrichtung 22 die Scanbewegung der Ablenkeinheit 18 mitvollziehen.

Als erstes Umlenkelement 30 fungiert hier ein Prisma. Alternativ ist auch ein Spiegel oder ein sonstiges optisches Element zum Umlenken nach unten in Richtung der Empfangsoptik 26 möglich. Die genaue Form und Ausgestaltung des ersten Umlenkelements hängt vom konkreten Aufbau des Laserscanners 10 und der gewünschten Umlenkwirkung ab. Auch durch Diffraktion oder Streuung lässt sich eine Umlenkung erzielen. Außerdem sind zusätzliche strahlformende Wirkungen denkbar. Als Material kommen Kunststoff, Glas und jegliche sonstigen optisch nutzbaren Stoffe in Frage.

Es gibt noch einen oberen Teil des Sendelichts 24b, der von der Abschirmeinrichtung 22 abgeschattet wird. Das geschieht nicht bereits vor der Ablenkung durch die Ablenkeinheit 18, sondern kurz danach. In der Ausführungsform nach Figur 1 und 2 ist demnach die Abschattungswirkung der Abschirmeinrichtung 22 nur teilweise kompensiert.

Figur 3 ist eine dreidimensionale Ansicht des Strahlengangs im Bereich der Ablenkeinheit 18 des Laserscanners 10 in einer weiteren Ausführungsform mit unterer und oberer Umgehung der Abschirmeinrichtung 22. Damit kann die empfangsseitige Apertur nochmals weiter vergrößert werden.

Dazu ist zusätzlich zu dem ersten Umlenkelement 30 und dessen Umgehungspfad ein zweites Umlenkelement 44 auf der Rückseite der Ablenkeinheit 18 vorgesehen, das einen weiteren Umgehungspfad für den oberen Teil des remittierten Sendelichts 24b eröffnet. Das zweite Umlenkelement 44 ist in einer Verlängerung des anfänglichen direkten Strahlweges des oberen Teils des remittierten Sendelichts 24b über die Ablenkeinheit 18 hinaus oder hinter die Ablenkeinheit 18 angeordnet. Das zweite Umlenkelement 44 kann prinzipiell in der gleichen Weise ausgeführt sein wie das erste Umlenkelement 30.

Auch auf dem Umgehungspfad des zweiten Umlenkelements 44 wird die Ablenkeinheit 18 nicht getroffen. Während aber das erste Umlenkelement 30 den unteren Teil des remittierten Sendelichts 24a schon direkt auf dem Weg von der Frontscheibe 42 als erstes Element vor Abschirmeinrichtung 22 und Ablenkeinheit 18 umlenkt, wird auf dem Umgehungspfad des zweiten Umlenkelements 44 die Abschirmeinrichtung 22 und die Ablenkeinheit 18 passiert.

Dazu weist die Ablenkeinheit 18 zwei Öffnungen 46a-b. Durch die erste Öffnung 46a erreicht der obere Teil des remittierten Sendelichts 24a zunächst das zweite Umlenkelement 44 hinter der Ablenkeinheit 18. Der Lichtpfad geht dann ein weiteres Mal nun durch die zweite Öffnung 46b durch die Ablenkeinheit 18 und weiter zu der Empfangsoptik 26 und dem Lichtempfänger 28.

In Figur 3 sind die Öffnungen 46a-b in Form von Schlitzen ausgestaltet, die den Bereich der Projektion der Abschirmeinrichtung 22 senkrecht auf die Spiegelfläche der Ablenkeinheit 18 besetzen. Dieser Bereich ist als Teil der Ablenkeinheit 18 ohnehin nicht funktional, da die Abschirmeinrichtung 22 ihn abschattet. Auch die beiden Umlenkelemente 30, 44 besetzen nur Positionen, die ansonsten Totzonen wären. Die Funktionalität des Laserscanners 10 ist also in keiner Weise eingeschränkt, sondern nur durch die zusätzlichen umgelenkten Lichtanteile von unterem und oberem Teil des remittierten Sendelichts 24a-b eine höhere Empfindlichkeit erreicht.

Es sind Ausführungsformen vorstellbar, in denen nur der längere Umgehungspfad verwirklicht, also nur das zweite Umlenkelement 44 und kein erstes Umlenkelement 30 vorgesehen ist. Dabei wäre auch prinzipiell denkbar, dass das erste Umlenkelement 30 und/oder das zweite Umlenkelement 44 kleiner ist, als dies für eine vollständige Umlenkung des jeweiligen Teils des remittierten Sendelichts 24a-b erforderlich wäre.

Erfindungsgemäß ist die effektive Fläche der Ablenkung und damit die effektive Empfangsapertur vergrößert. Als Zahlenbeispiel können bei einer nutzbaren Spiegelfläche der Ablenkeinheit 18 von 410 mm² bei der Ausführungsform nach Figur 1 und 2 90 mm², bei der Ausführungsform nach Figur 3 sogar zweimal 90 mm² gewonnen werden.

## Patentansprüche

1. Optoelektronischer Sensor (10), insbesondere Laserscanner, zur Erfassung von Objekten in einem Überwachungsbereich (20), wobei der Sensor (10) einen Lichtsender (12) zum Aussenden von Sendelicht (16), eine bewegliche Ablenkeinheit (18) zur periodischen Ablenkung des Sendelichts (16), einen Lichtempfänger (28) zum Erzeugen eines Empfangssignals aus von Objekten in dem Überwachungsbereich (20) remittiertem Sendelicht (24), wobei Lichtsender (12) und Lichtempfänger (28) koaxial angeordnet sind und Sendestrahlengang und Empfangsstrahlengang überlappen, und eine Steuer- und Auswertungseinheit (36) zur Erfassung von Informationen über Objekte in dem Überwachungsbereich (20) anhand des Empfangssignals aufweist, wobei um den Strahlengang des Sendelichts (16) eine Abschirmeinrichtung (22) angeordnet ist, um ein Übersprechen des Sendelichts (16) auf den Lichtempfänger (28) zu unterdrücken,
**dadurch gekennzeichnet,**
**dass** im Strahlengang des remittierten Sendelichts (24) ein Umlenkelement (30, 44) angeordnet ist, um einen Anteil des remittierten Sendelichts (24a-b) zu dem Lichtempfänger (28) umzulenken, der ohne das Umlenkelement (30, 44) die Abschirmeinrichtung (22) treffen würde.

2. Sensor (10) nach Anspruch 1,
wobei das Umlenkelement (30, 44) derart angeordnet und ausgebildet ist, dass der umgelenkte Anteil des remittierten Sendelichts (24a-b) die Ablenkeinheit (18) nicht mehr trifft.

3. Sensor (10) nach Anspruch 1 oder 2,
wobei die Abschirmeinrichtung (22) als ein das Sendelicht (16) umgebender Sendetubus ausgebildet ist.

4. Sensor (10) nach einem der vorhergehenden Ansprüche,
wobei das Umlenkelement (30, 44) eine Spiegelfläche oder ein Prisma aufweist.

5. Sensor (10) nach einem der vorhergehenden Ansprüche,
wobei das Umlenkelement (30, 44) mit der Ablenkeinheit (18) mitbewegt angeordnet ist.

6. Sensor (10) nach einem der vorhergehenden Ansprüche,
wobei ein erstes Umlenkelement (30) im Strahlengang des remittierten Sendelichts (24a) vor der Ablenkeinheit (18) angeordnet ist.

7. Sensor (10) nach einem der vorhergehenden Ansprüche,
wobei die Abschirmeinrichtung (22) L-förmig ausgebildet ist und ein erstes Umlenkelement (30) zwischen den Armen der L-Form angeordnet ist.

8. Sensor (10) nach einem der vorhergehenden Ansprüche,
wobei ein zweites Umlenkelement (44) in der Verlängerung des Strahlengangs des remittierten Sendelichts (24b) über die Ablenkeinheit (18) hinaus angeordnet ist.

9. Sensor (10) nach einem der vorhergehenden Ansprüche,
wobei die Ablenkeinheit (18) mindestens einen Bereich (46a-b) aufweist, der remittiertes Sendelicht (24b) zumindest teilweise passieren lässt.

10. Sensor (10) nach Anspruch 9,
wobei der Bereich (46a-b) so angeordnet ist, dass remittiertes Sendelicht (24b) durch die Ablenkeinheit (18) auf das zweite Umlenkelement (44) und von dem zweiten Umlenkelement (44) erneut durch die Ablenkeinheit zu dem Lichtempfänger (28) gelangt.

11. Sensor (10) nach Anspruch 9 oder 10,
wobei der Bereich (46a-b) als zwei Schlitze in der Ablenkeinheit (18) in der Projektion der Abschirmeinrichtung (22) auf die Ablenkeinheit (18) ausgebildet ist.

12. Sensor (10) nach einem der vorhergehenden Ansprüche,
wobei die bewegliche Ablenkeinheit (18) als Drehspiegel mit einer Spiegelfläche ausgebildet ist.

13. Sensor (10) nach einem der vorhergehenden Ansprüche,
wobei die Abschirmeinrichtung (22) mittig im Strahlengang des remittierten Sendelichts (24) liegt.

14. Sensor (10) nach einem der vorhergehenden Ansprüche,
wobei die Steuer- und Auswertungseinheit (36) dafür ausgebildet ist, aus einer Lichtlaufzeit zwischen Aussenden des Sendelichts (16) und Empfangen des remittierten Sendelichts (24) einen Abstand des Objekts zu bestimmen.

15. Verfahren zur Erfassung von Objekten in einem Überwachungsbereich (20), bei dem von einem Lichtsender (12) Sendelicht (16) ausgesandt, mit Hilfe einer beweglichen Ablenkeinheit (18) periodisch abgelenkt, nach Remission an dem Objekt als remittiertes Sendelicht (24) in einem Lichtempfänger (28) wieder empfangen und in ein Empfangssignal gewandelt wird, um aus dem Empfangssignal eine Objektinformation zu erzeugen, wobei Lichtsender (12) und Lichtempfänger (28) koaxial angeordnet sind und Sendestrahlengang und Empfangsstrahlengang überlappen und wobei ein Übersprechen des Sendelichts (16) auf den Lichtempfänger (28) von einer Abschirmeinrichtung (22) um den Strahlengang des Sendelichts (16) unterdrückt wird,
**dadurch gekennzeichnet,**
**dass** ein Anteil des remittierten Sendelichts (24a-b) von einem in dessen Strahlengang angeordneten Umlenkelement (30, 44) zu dem Lichtempfänger (28) umgelenkt wird, der ohne das Umlenkelement (30, 44) die Abschirmeinrichtung (22) treffen würde.

## Claims

1. An optoelectronic sensor (10), in particular a laser scanner, for detecting objects in a monitored area (20), the sensor (10) comprising a light transmitter (12) for transmitting transmission light (16), a movable deflection unit (18) for periodically deflecting the transmission light (16), a light receiver (28) for generating a reception signal from remitted transmission light (24) remitted by objects in the monitored area (20), wherein light transmitter (12) and light receiver (28) are arranged coaxially and transmission beam path and reception beam path overlap, and a control and evaluation unit (36) for detecting information about objects in the monitored area (20) using the reception signal, wherein a shielding device (22) is arranged around the beam path of the transmission light (16) in order to suppress crosstalk of the transmission light (16) to the light receiver (28), **characterized in that** a deflecting element (30, 44) is arranged in the beam path of the remitted transmission light (24) in order to deflect a portion of the remitted transmission light (24a-b) to the light receiver (28), which portion, without the deflecting element (30, 44), would impinge on the shielding device (22).

2. The sensor (10) according to claim 1,
wherein the deflecting element (30, 44) is arranged and configured so that the deflected portion of the remitted transmission light (24a-b) no longer impinges on the deflecting unit (18).

3. The sensor (10) according to claim 1 or 2,
wherein the shielding device (22) is configured as a transmission tube surrounding the transmission light (16).

4. The sensor (10) according to any of the preceding claims,
wherein the deflection element (30, 44) comprises a mirror surface or a prism.

5. The sensor (10) according to any of the preceding claims,
wherein the deflection element (30, 44) is arranged to move with the deflection unit (18).

6. The sensor (10) according to any of the preceding claims,
wherein a first deflection element (30) is arranged in the beam path of the remitted transmission light (24a) in front of the deflection unit (18).

7. The sensor (10) according to any of the preceding claims,
wherein the shielding device (22) is L-shaped and a first deflecting element (30) is arranged between the arms of the L-shape.

8. The sensor (10) according to any of the preceding claims,
wherein a second deflection element (44) is arranged in the extension of the beam path of the remitted transmission light (24b) beyond the deflection unit (18).

9. The sensor (10) according to any of the preceding claims,
wherein the deflection unit (18) comprises at least one region (46a-b) which allows remitted transmission light (24b) to at least partially pass.

10. The sensor (10) according to claim 9,
wherein the region (46a-b) is arranged such that remitted transmission light (24b) passes through the deflection unit (18) onto the second deflection element (44) and from the second deflection element (44) again through the deflection unit to the light receiver (28).

11. The sensor (10) according to claim 9 or 10,
wherein the area (46a-b) is formed as two slots in the deflection unit (18) in the projection of the shielding device (22) onto the deflection unit (18).

12. The sensor (10) according to any of the preceding claims,
wherein the movable deflection unit (18) is configured as a rotating mirror with a mirror surface.

13. The sensor (10) according to any of the preceding claims,
wherein the shielding device (22) is arranged centrally in the beam path of the remitted transmission light (24).

14. The sensor (10) according to any of the preceding claims,
wherein the control and evaluation unit (36) is configured to determine a distance of the object from a light time of flight between transmission of the transmission light (16) and reception of the remitted transmission light (24).

15. A method for detecting objects in a monitored area (20), wherein transmission light (16) is transmitted by a light transmitter (12), is periodically deflected by means of a movable deflection unit (18), is received in a light receiver (28) as remitted transmission light (24) after remission at the object, and is converted into a reception signal in order to generate object information from the reception signal, wherein light transmitter (12) and light receiver (28) are arranged coaxially and transmission beam path and reception beam path overlap, and wherein crosstalk of the transmission light (16) to the light receiver (28) is suppressed by a shielding device (22) around the beam path of the transmission light (16), **characterized in that** a portion of the remitted transmission light (24a-b) is deflected to the light receiver (28) by a deflecting element (30, 44) arranged in its beam path, which portion, without the deflecting element (30, 44), would impinge on the screening device (22).

## Revendications

1. Capteur optoélectronique (10), en particulier scanner laser, pour la détection d'objets dans une zone à surveiller (20), le capteur (10) comprenant un émetteur de lumière (12) pour émettre de la lumière d'émission (16), une unité de déviation mobile (18) pour dévier périodiquement la lumière d'émission (16), un récepteur de lumière (28) pour générer un signal de réception à partir de la lumière d'émission (24) réémise par des objets dans la zone à surveiller (20), l'émetteur de lumière (12) et le récepteur de lumière (28) étant disposés de façon coaxiale, le chemin optique d'émission et le chemin optique de réception se chevauchent, et une unité de commande et d'évaluation (36) pour acquérir sur la base du signal de réception des informations sur des objets dans la zone à surveiller (20), un dispositif de protection (22) étant disposé autour du chemin optique de la lumière d'émission (16) pour supprimer une diaphonie de la lumière d'émission (16) sur le récepteur de lumière (28),
**caractérisé en ce que**
un élément de renvoi (30, 44) est disposé dans le chemin optique de la lumière d'émission réémise (24), afin de renvoyer une part de la lumière d'émission réémise (24a - b) vers le récepteur de lumière (28), part de lumière qui, sans l'élément de renvoi (30, 44), atteindrait le dispositif de protection (22).

2. Capteur (10) selon la revendication 1,
dans lequel l'élément de renvoi (30, 44) est disposé et réalisé de telle sorte que la part renvoyée de la lumière d'émission réémise (24a - b) n'atteint plus l'unité de déviation (18).

3. Capteur (10) selon la revendication 1 ou 2,
dans lequel le dispositif de protection (22) est réalisé sous forme de tube d'émission entourant la lumière d'émission (16).

4. Capteur (10) selon l'une des revendications précédentes,
dans lequel l'élément de renvoi (30, 44) comprend une surface miroir ou un prisme.

5. Capteur (10) selon l'une des revendications précédentes,
dans lequel l'élément de renvoi (30, 44) est disposé de manière à se déplacer avec l'unité de déviation (18).

6. Capteur (10) selon l'une des revendications précédentes,
dans lequel un premier élément de renvoi (30) est disposé dans le chemin optique de la lumière d'émission réémise (24a) en amont de l'unité de déviation (18).

7. Capteur (10) selon l'une des revendications précédentes,
dans lequel le dispositif de protection (22) est réalisé en forme de L, et un premier élément de renvoi (30) est disposé entre les branches de la forme en L.

8. Capteur (10) selon l'une des revendications précédentes,
dans lequel un second élément de renvoi (44) est disposé dans le prolongement du chemin optique de la lumière d'émission réémise (24b) au-delà de l'unité de déviation (18).

9. Capteur (10) selon l'une des revendications précédentes,
dans lequel l'unité de déviation (18) comprend au moins une zone (46a - b) qui permet à la lumière d'émission réémise (24b) de passer au moins partiellement.

10. Capteur (10) selon la revendication 9,
dans lequel la zone (46a - b) est disposée de telle sorte que la lumière d'émission réémise (24b) parvient à travers l'unité de déviation (18) jusque sur le second élément de renvoi (44) et parvient depuis le second élément de renvoi (44) à nouveau à travers l'unité de déviation jusqu'au récepteur de lumière (28).

11. Capteur (10) selon la revendication 9 ou 10,
dans lequel la zone (46a - b) est réalisée sous la forme de deux fentes dans l'unité de déviation (18) dans la projection du dispositif de protection (22) sur l'unité de déviation (18).

12. Capteur (10) selon l'une des revendications précédentes,
dans lequel l'unité de déviation mobile (18) est réalisée sous forme de miroir rotatif ayant une surface miroir.

13. Capteur (10) selon l'une des revendications précédentes,
dans lequel le dispositif de protection (22) est situé au centre du chemin optique de la lumière d'émission réémise (24).

14. Capteur (10) selon l'une des revendications précédentes,
dans lequel l'unité de commande et d'évaluation (36) est réalisée pour déterminer une distance de l'objet à partir d'un temps de parcours de lumière entre l'émission de la lumière d'émission (16) et la réception de la lumière d'émission réémise (24).

15. Procédé de détection d'objets dans une zone à surveiller (20),
dans lequel de la lumière d'émission (16) est émise par un émetteur de lumière (12), déviée périodiquement à l'aide d'une unité de déviation mobile (18), reçue dans un récepteur de lumière (28) comme lumière d'émission réémise (24) après réémission sur l'objet, et convertie en un signal de réception, afin de générer des informations sur l'objet à partir du signal de réception, l'émetteur de lumière (12) et le récepteur de lumière (28) étant disposés de façon coaxiale, le chemin optique d'émission et le chemin optique d'émission se chevauchant, et une diaphonie de la lumière d'émission (16) sur le récepteur de lumière (28) étant supprimée par un dispositif de protection (22) disposé autour du chemin optique de la lumière d'émission (16), **caractérisé en ce que**
une part de la lumière d'émission réémise (24a - b) est renvoyée vers le récepteur de lumière (28) par un élément de renvoi (30, 44) disposé dans son chemin optique, part de lumière qui, sans l'élément de renvoi (30, 44), atteindrait le dispositif de protection (22).
